(19) Europäisches Patentamt
European Patent Office
Office européen des brevets

(11) **EP 1 149 049 B1**

(12) **FASCICULE DE BREVET EUROPEEN**

(45) Date de publication et mention
de la délivrance du brevet:
**02.06.2004 Bulletin 2004/23**

(51) Int Cl.[7]: **C01F 11/22**, C01B 7/19

(21) Numéro de dépôt: **99958231.5**

(86) Numéro de dépôt international:
**PCT/FR1999/002989**

(22) Date de dépôt: **02.12.1999**

(87) Numéro de publication internationale:
**WO 2000/040510 (13.07.2000 Gazette 2000/28)**

(54) **PROCEDE DE RECYCLAGE DE POUDRE FINE DE FLUORURE DE CALCIUM**

WIEDERVERWERTUNG VON FEINEN CALCIUM FLUORID PULVERN

METHOD FOR RECYCLING FINE CALCIUM FLUORIDE POWDER

(84) Etats contractants désignés:
**AT BE CH CY DE DK ES FI FR GB GR IE IT LI LU MC NL PT SE**

(30) Priorité: **30.12.1998 FR 9816625**

(43) Date de publication de la demande:
**31.10.2001 Bulletin 2001/44**

(73) Titulaire: **Atofina**
**92800 Puteaux (FR)**

(72) Inventeurs:
• **BIRAGNET, Jean-Marc**
**F-69006 Lyon (FR)**
• **MURPHY, John-David**
**Bootle, Merseyside L30 20B (GB)**
• **KOUACHE, Henri**
**F-69960 Corbap (FR)**

(56) Documents cités:
**DD-A- 155 979**

• **PATENT ABSTRACTS OF JAPAN vol. 001, no. 053 (C-013), 23 mai 1977 (1977-05-23) & JP 52 010893 A (DAIKIN IND LTD), 27 janvier 1977 (1977-01-27) cité dans la demande & CHEMICAL ABSTRACTS, vol. 86, no. 22, 1977 Columbus, Ohio, US; abstract no. 157754, AISO, HIROSHI; TAKEUCHI, TOSHINOBU: "***Agglomerated*** fluorite and ***preparation*** of hydrofluoric"**
• **DATABASE WPI Section Ch, Week 7712 Derwent Publications Ltd., London, GB; Class E36, AN 77-20816Y XP002114312 & JP 52 017390 A (DAIKIN KOGYO KK), 9 février 1977 (1977-02-09)**

**Description**

La présente invention a pour objet un procédé de recyclage de fluorure de calcium pulvérulent sous forme de particules micrométriques. Elle concerne également un procédé de fabrication de fluorure d'hydrogène mettant en oeuvre ledit procédé.

Des compositions renfermant des ions fluorures sont souvent obtenues comme résidus de fabrication dans diverses installations industrielles, telles que les installations de production d'acide fluorhydrique (HF) ou des composés du type chlorofluorocarbures, hydrochlorofluorocarbures, ou hydrofluorocarbures, utilisables notamment comme réfrigérants.

Ces compositions sont généralement neutralisées à la chaux ou au carbonate de calcium. Le précipité formé est séparé par floculation, puis décantation des suspensions qui résultent de la neutralisation, et enfin filtration par des moyens appropriés tels que des filtres à tambour. Ces compositions se présentent pratiquement sous la forme de boues ou gâteaux, et ont ceci de particulier d'une part, que le fluorure de calcium est présent sous forme de particules micrométriques, extrêmement fines, de l'ordre de 0,5 à 10 μm, et d'autre part, qu'elles comprennent une teneur très élevée en eau, environ de 20 à 60 % selon le mode de filtration utilisé.

Etant donné l'importance des quantités d'HF ou de composés utilisables notamment comme réfrigérants produites dans une installation industrielle, les compositions précitées sont elles-mêmes produites à raison de plusieurs milliers de tonnes par an et sont généralement stockées en décharge.

Or le fluorure de calcium, encore appelé fluorine (du nom du minerai qui le contient), est précisément une des matières premières du procédé industriel largement utilisé pour la fabrication de fluorure d'hydrogène (HF).

Ce procédé met en effet en oeuvre de la fluorine et de l'acide sulfurique, pour produire l'HF et du sulfate de calcium selon la réaction :

$$CaF_2 + H_2SO_4 \rightarrow 2HF + CaSO_4 \qquad (1)$$

Dans ce procédé, la fluorine est mise en contact, sous forme de solide pulvérulent, avec l'acide sulfurique dans un four tournant, à une température d'environ 500°C.

Un four tournant est un cylindre horizontal animé d'un mouvement de rotation autour de son axe. Les réactifs sont introduits à une extrémité de ce cylindre, l'HF produit sous forme de gaz étant recueilli à cette même extrémité. Le sulfate de calcium est récupéré à l'autre extrémité sous forme de solide également pulvérulent. La réaction doit se dérouler en l'absence d'eau pour éviter la corrosion du four.

Il serait donc très souhaitable d'utiliser les compositions à base de particules micrométriques de $CaF_2$, telles que celles mentionnées précédemment, comme matière première pour la production d'HF. Une telle utilisation soulève cependant des difficultés de mise en oeuvre de la réaction (1) dans un four tournant, liées à la taille de particules desdites compositions, et au séchage desdites compositions au niveau requis pour ladite utilisation.

La demande de brevet EP 460 524 décrit un procédé de fabrication d' HF mettant en oeuvre la réaction (1), qui comporte une étape de purification du gaz produit par la réaction, à l'issue de laquelle est obtenue une solution aqueuse comprenant de 30 à 50 % d'acide fluorosilicique ($H_2SiF_6$) et 5 à 20 % d' HF. Le traitement à la chaux d'une telle solution conduit à un mélange de fluorure de calcium ($CaF_2$) et de silice ($SiO_2$) qui est impropre à toute utilisation et doit être stocké comme déchet. Ce document enseigne un traitement de cette solution avec du carbonate de calcium puis avec une substance alcaline, qui permet de séparer le fluorure de calcium de la silice. Ce document préconise, en conséquence, l'utilisation du fluorure de calcium ainsi séparé comme matière première pour la fabrication d'HF. Il envisage également, pour cette même utilisation et dans le but de réduire la teneur de la silice encore présente sous forme d'impureté, le mélange dudit fluorure avec de la fluorine. Il ne donne cependant aucune information détaillée sur l'utilisation effective d'un tel produit, dans les conditions industrielles de fonctionnement d'un four de fabrication d'HF.

Or, comme exposé précédemment, l'utilisation de fluorure de calcium solide pulvérulent, en tant que matière première pour la fabrication industrielle d'HF, nécessite la satisfaction impérative de critères de taille des particules. La mise en oeuvre de $CaF_2$ sous forme de fines particules (de l'ordre du micromètre) est ainsi exclue, en raison de problèmes d'envolement de ces particules dans l'HF gazeux produit dans le four, et d'une élévation de viscosité dans la zone réactionnelle du mélange de nature à le faire adhérer aux parois intérieures du four, ces divers problèmes compromettant le bon déroulement d'une exploitation en continu.

Ces difficultés liées à l'utilisation dans un four pour la fabrication de HF de fluorine finement divisée sont bien reconnues en revanche par le brevet japonais JP 52-10893. Ce document recommande pour résoudre ce problème de procéder à une granulation, en mélangeant dans un granulateur malaxeur ladite poudre avec, comme agent auxiliaire, de l'acide fluorhydrique dilué, de l'acide sulfurique dilué, et une solution concentrée de gypse ou une solution en contenant. Une étape de séchage à une température comprise entre 100 et 450°C est également requise. Ce procédé nécessite cependant une opération de mise en forme supplémentaire et des équipements industriels adaptés à sa mise en oeuvre.

Un but de la présente invention est d'éviter la mise en décharge, toujours préjudiciable pour l'environnement, d'une composition comprenant du fluorure de calcium sous forme de particules micrométriques.

Un autre but de l'invention est de proposer un procédé de recyclage d'une telle composition permettant sa valorisation, sans nécessiter l'installation de nouveaux équipements industriels.

Un autre but de l'invention est de proposer un procédé de recyclage d'une telle composition permettant la fabrication industrielle d'HF dans des conditions améliorées.

Il a à présent été trouvé que ces buts peuvent être atteints, en totalité ou en partie, au moyen du procédé de recyclage qui est décrit ci-dessous.

L'invention a donc pour objet, en premier lieu, un procédé de recyclage d'une composition contenant du fluorure de calcium pulvérulent sous forme de particules micrométriques comprenant :

    (i) une étape de mélange, en présence d'eau, de ladite composition avec du fluorure de calcium pulvérulent dont la taille de particules convient à l'alimentation d'un four pour la fabrication de HF (également dénommé spath naturel), dans un rapport r inférieur à 75 % en poids, de préférence inférieur à 30 %, r étant le poids de fluorure de calcium de ladite composition divisé par le poids total de $CaF_2$ dans le mélange, puis

    (ii) une étape de séchage du mélange résultant de (i) jusqu'à l'obtention d'une teneur en eau résiduelle convenant également à l'alimentation d'un four pour la fabrication de HF ;

    l'étape (ii) étant éventuellement réalisée simultanément avec l'étape (i).

ledit procédé étant en outre caractérisé en ce que ou bien :

    ($\alpha$) ladite étape de mélange (i) est mise en oeuvre en mélangeant de façon homogène dans le rapport r désiré :

-   la composition à recycler, éventuellement diluée au préalable avec de l'eau, avec
-   la suspension de spath naturel destinée à l'étape de filtration du procédé de préparation dudit spath

ou bien :

    ($\beta$) ladite étape de mélange (i) est mise en oeuvre en mélangeant de façon homogène dans le rapport r désiré:

-   la composition à recycler, avec
-   le gâteau humide de spath naturel, provenant de l'étape de filtration du procédé de préparation dudit spath ;

et on sèche simultanément ledit mélange.

Ce procédé permet de réutiliser, dans des conditions satisfaisantes de fonctionnement en continu d'un four tournant de fabrication d'HF selon la réaction (1 ), une composition de spath synthétique (tel que défini ci-après) qui devrait autrement être stockée en tant que déchet. Il a de plus été trouvé que le fluorure de calcium tel qu'obtenu par ce procédé apporte en ce qui concerne la production d'HF divers avantages, comme expliqué plus loin.

Les pourcentages indiqués dans le présent texte sont, en l'absence d'indication contraire, des pourcentages en poids.

La composition à recycler comprend généralement le fluorure de calcium sous la forme de particules dont le diamètre nominal moyen est compris entre 0,5 et 10 µm, de préférence entre 1 et 5 µm.

Le diamètre nominal moyen est la médiane de la distribution des tailles des particules de fluorure de calcium.

Les tailles sont déterminées, selon leur ordre de grandeur, soit par une technique faisant appel à une mesure de vitesse de sédimentation, soit par une technique de diffraction laser, soit par tamisage avec des tamis d'ouverture de maille croissante.

La composition à recycler comprend, outre le $CaF_2$, de l'eau, à une teneur comprise entre 20 et 60 %, de préférence entre 30 et 55 %. Une telle composition est également désignée dans le présent texte par la dénomination de "spath synthétique". Elle peut être obtenue à partir d'effluents liquides contenant des ions fluorures, provenant d'un atelier de fabrication d'HF ou de composés fluorés utilisables notamment comme réfrigérants. Il suffit pour cela d'opérer par filtration (par exemple au moyen d'un filtre à tambour) de la suspension résultant de la neutralisation par la chaux desdits effluents, sans qu'il soit nécessaire de procéder à une étape de séchage supplémentaire. Une telle étape serait du reste difficile à réaliser en raison de la fine taille des particules.

On préfère mettre en oeuvre une composition à recycler (ou spath synthétique) dont la teneur en silice ($SiO_2$) est inférieure à 1 %, de préférence à 0,8 %. Le rendement en HF produit est en effet, dans ce cas, amélioré.

Le diamètre nominal moyen des particules de spath naturel est généralement comprise entre 30 et 400 µm, de préférence entre 40 et 200 µm.

Le spath naturel peut être préparé à partir de minerai naturel de spath (ou fluorine), par un procédé comprenant plusieurs étapes de concassage ou broyage et de purifications, réalisées le plus souvent par flottation.

Les dernières étapes d'un tel procédé incluent obligatoirement une étape de filtration d'une suspension de spath naturel dont la teneur en extrait sec est comprise entre 5 et 75 %, de préférence entre 20 et 50 %. A l'issue de cette étape de filtration, la teneur en eau du spath naturel est généralement comprise entre 1 et 20 %, de préférence entre 1 et 15 %, la composition correspondante étant désignée par le terme de "gâteau humide". Cette étape de filtration est nécessairement réalisée sur le site de production du minerai, et est mise en oeuvre par tout moyen adapté à cette fin, tel qu'un filtre à tambour.

Cette étape est obligatoirement suivie par une étape de séchage du gâteau humide de manière à obtenir un spath naturel dont la teneur en eau résiduelle convient à l'alimentation d'un four de fabrication d'HF.

Cette teneur est avantageusement inférieure à 1 %, de préférence inférieure à 0,1 %. Une telle teneur en eau est indispensable pour satisfaire aux contraintes impératives d'utilisation dans un four HF, où une quantité d'eau excessive pourrait entraîner une corrosion du matériau constitutif du four, préjudiciable à la sécurité de l'exploitation de l'unité industrielle. Cette étape de séchage peut être mise en oeuvre soit sur le site de production du minerai, soit sur le site de l'unité industrielle de fabrication d'HF. Elle est mise en oeuvre par tout moyen adapté à cette fin, tel qu'un four tournant fonctionnant à une température comprise entre 100 et 500 °C, de préférence entre 100 et 200 °C.

Selon la première variante ($\alpha$) du procédé selon l'invention, l'étape de mélange (i) est mise en oeuvre en mélangeant de façon homogène dans le rapport r désiré :

- la composition à recycler, éventuellement diluée au préalable avec de l'eau, avec
- la suspension de spath naturel destinée à l'étape de filtration du procédé de préparation dudit spath.

Ce mélange peut être mis en oeuvre dans une cuve pourvue d'un dispositif d'agitation et avec introduction de la quantité d'eau nécessaire pour faciliter le mélange.

Dans le cas de cette première variante ($\alpha$) le mélange obtenu à l'étape (i) est ensuite avantageusement, et conformément à l'étape (ii) du procédé selon l'invention, séché en 2 étapes consistant :

- (ii1) d'une opération de filtration de manière à obtenir une composition solide pulvérulente de particules de fluorure de calcium, dont la teneur en eau est comprise entre 1 et 20 %, de préférence entre 1 et 15 %, puis
- (ii2) d'une opération de séchage de manière à obtenir un fluorure de calcium dont la teneur en eau résiduelle est inférieure à 1 %, de préférence inférieure à 0,1%.

Selon une modalité particulièrement avantageuse de la première variante ($\alpha$) du procédé selon l'invention, ces 2 étapes sont mises en oeuvre respectivement dans le dispositif de filtration utilisé dans le procédé de préparation du spath naturel, tel que par exemple dans un filtre à tambour, et dans le dispositif de séchage également utilisé dans le procédé de préparation du spath naturel, tel qu'un four tournant. Cette modalité permet de réaliser le recyclage du spath synthétique en utilisant des équipements industriels existants sur le site de production de fluorine, sans nécessiter l'installation d'équipements industriels coûteux.

Selon une deuxième variante ($\beta$) du procédé selon l'invention, celui-ci est mis en oeuvre en mélangeant de façon homogène dans le rapport r désiré :

- la composition à recycler, avec
- le gâteau humide de spath naturel, provenant de l'étape de filtration du procédé de préparation dudit spath ;

et en séchant simultanément ledit mélange.

Cette opération est par exemple mise en oeuvre au moyen d'un sécheur à disque. Elle peut être avantageusement réalisée sur le site de production de l'HF, en utilisant le dispositif utilisé pour sécher le gâteau humide de spath naturel, sans nécessiter l'installation d'équipements industriels supplémentaires.

Un sécheur à disque est un cylindre fixe horizontal pourvu d'un axe de rotation sur lequel sont fixés des disques creux équipés sur leur périphérie de taquets. L'intérieur des ces disques est relié à un circuit d'alimentation en vapeur portée par exemple à une pression de 10 bars.

Les 2 compositions sont introduites à une extrémité du cylindre, elles sont ensuite poussées par le mouvement de rotation des disques vers l'autre extrémité du cylindre. Durant ce déplacement d'une extrémité du cylindre à l'autre, les 2 compositions sont à la fois mélangées et séchées. Le temps de séjour du produit dans le sécheur à disques est fixé par la vitesse de rotation de l'arbre et l'orientation des taquets et peut être sans difficulté déterminé par l'homme du métier au moyen d'essais répétitifs.

L'invention a également pour objet un procédé de fabrication d'HF par réaction de fluorure de calcium pulvérulent avec de l'acide sulfurique, dans un four tournant porté à une température comprise entre 400 et 700 °C, de préférence entre 500 et 600°C, caractérisé en ce que le fluorure de calcium pulvérulent est obtenu par le procédé de recyclage tel que défini précédemment.

Ce procédé permet la production d'HF dans des conditions satisfaisantes de fonctionnement en continu d'un four tournant. De plus, de manière surprenante, cette production offre au moins l'un des avantages suivants :

- obtention du sulfate de calcium avec une pureté améliorée,
- amélioration de la productivité en HF,
- diminution du risque de corrosion du four,
- diminution de la consommation des réactifs par tonne d'HF produite.

L'invention a enfin pour objet un fluorure de calcium pulvérulent caractérisé en ce qu'il comprend le mélange de la composition à recycler et de spath naturel, dans le rapport r inférieur à 75 %, de préférence inférieur à 30 %, tel que mis en oeuvre dans le procédé de recyclage selon l'invention.

L'invention est illustrée par les exemples suivants qui ne doivent en aucun cas être interprétés de manière limitative.

**Exemple 1 : Recyclage d'une composition de spath synthétique dans du spath naturel dans un rapport r égal à 11 % avec séchage en four tournant**

On utilise 2 tonnes d'une composition de spath synthétique contenant 50 % de fluorure de calcium sous forme de particules dont le diamètre nominal moyen est de 2 µm, et 50 % d'eau.

Le recyclage est réalisé dans l'unité de préparation du spath naturel.

Cette composition est diluée à l'eau, de manière à obtenir 3,1 t de suspension ayant 32 % d'extrait sec.

Cette suspension est alors introduite dans une cuve tampon munie d'un agitateur rotatif à pales, dans laquelle sont également introduites 20,8 t d'une suspension de spath naturel dont le diamètre nominal moyen est compris entre 50 et 60 µm, et ayant 39 % d'extrait sec.

Le rapport r du poids de particules micrométriques de fluorure de calcium au poids total dudit fluorure de calcium est de 11 %.

On obtient 24 t d'une suspension de fluorure de calcium avec un extrait sec de 38 %.

Cette suspension est alors introduite pour filtration dans 2 filtres à tambour montés en parallèle, chacun ayant une capacité au moins égale à 12 t/heure de suspension.

On obtient en sortie un gâteau humide de fluorure de calcium dont la teneur en eau est de 14 %.

Ce gâteau est introduit par une trémie, à raison de 5 t/h, dans un four tournant ayant une capacité d'évaporation d'eau de 1000 kg/heure.

On obtient un fluorure de calcium pulvérulent dont la teneur en eau est inférieure à 0,1 %.

**Exemple 2 : Recyclage d'une composition de spath synthétique dans du spath naturel dans un rapport r égal à 25 % avec mélange et séchage en sécheur à disque**

On utilise 50 kg d'une composition de spath synthétique contenant 50 % de fluorure de calcium sous forme de particules dont le diamètre nominal moyen est de 2 µm, et 50 % d'eau.

On utilise 81,5 kg d'une composition contenant du spath naturel et 8 % d'eau.

Ces 2 compositions sont introduites dans un sécheur à disque.

Le rapport r du poids de particules micrométriques de fluorure de calcium au poids total dudit fluorure de calcium est de 25 %.

On utilise un sécheur à disque ayant une capacité d'évaporation d'eau au moins égale à 15 kg/heure.

La composition de spath synthétique est introduite à raison de 25 kg/heure, et la composition de spath naturel précitée est introduite à raison de 41 kg/heure.

Le temps de séjour est fixé à environ 2 heures.

On obtient un fluorure de calcium pulvérulent dont la teneur en eau est inférieure à 0,1 %.

**Exemple 3 : Recyclage d'une composition de spath synthétique dans du spath naturel dans un rapport r égal à 60 % avec séchage en sécheur à disque**

On répète l'exemple 2 en introduisant dans le sécheur à disques :

- 55 kg de la composition de spath synthétique à raison d'un débit de 27,5 kg/heure,
- 20 kg de la composition contenant du spath naturel à raison d'un débit de 10 kg/heure.

On obtient un fluorure de calcium pulvérulent dont l'humidité est comprise entre 0,1 et 0,2 %.

**Exemple comparatif 1 : Utilisation dans un four de fabrication d'HF de spath naturel**

On alimente un four de fabrication d'HF avec du spath naturel et de l'acide sulfurique.

Le débit de $CaF_2$ est de 1576 kg/h.

Le débit d'$H_2SO_4$ est de 2108 kg/heure.

La température de chauffe du four est de 575°C.

On produit de l'HF en continu avec un débit de 698 kg/h dans des conditions satisfaisantes de marche du four.

L'analyse de la teneur du sulfate de calcium en $CaF_2$ et $H_2SO_4$ donne, respectivement, les résultats suivants : 2,4 % et 2,2 %.

**Exemple 4 : Utilisation dans un four de fabrication d'HF chauffé à 575°C d'un mélange spath synthétique/spath naturel dans le rapport r égal à 11 %**

On répète l'exemple comparatif précédent sauf que le four est alimenté avec du fluorure de calcium préparé conformément à l'exemple 1.

On produit de l'HF en continu avec un débit de 710 kg/h dans des conditions satisfaisantes de marche du four.

L'analyse de la teneur en $CaF_2$ et $H_2SO_4$ donne, respectivement, les résultats suivants : 1,4% et 1,7%.

**Exemple 5 : Utilisation dans un four de fabrication d'HF d'un mélange spath synthétique/spath naturel dans le rapport r égal à 25 %**

On répète l'exemple 4 en utilisant du fluorure de calcium préparé conformément à l'exemple 2.

On produit de l'HF en continu avec un débit de 716 kg/h dans des conditions satisfaisantes de marche du four.

L'analyse de la teneur en $CaF_2$ et $H_2SO_4$ donne, respectivement, les résultats suivants : 0,9% et 1,1%.

**Exemple 6 : Utilisation dans un four de fabrication d'HF d'un mélange spath synthétique/spath naturel dans le rapport r égal à 60 %**

On répète l'exemple 4 en utilisant du fluorure de calcium préparé conformément à l'exemple 3.

On produit de l'HF en continu avec un débit de 722 kg/h dans des conditions satisfaisantes de marche du four.

L'analyse de la teneur en $CaF_2$ et $H_2SO_4$ donne, respectivement, les résultats suivants : 0,4 % et 0,7 %.

Les exemples 4 à 6 font apparaître, par rapport à l'exemple comparatif 1, une amélioration de la productivité en HF, ainsi qu'une réduction de la teneur en impuretés du sulfate de calcium.

**Exemple 7 : Utilisation dans un four de fabrication d'HF chauffé à 560°C d'un mélange spath synthétique/spath naturel dans le rapport r égal à 11 %**

On répète l'exemple 4 en fixant une température de chauffe du four égale à 560°C.

On produit de l'HF en continu avec un débit de 706 kg/h dans des conditions satisfaisantes de marche du four.

L'analyse de la teneur en $CaF_2$ et $H_2SO_4$ donne, respectivement, les résultats suivants : 1,7% et 1,9%.

Cet exemple montre, par rapport à l'exemple comparatif 1, une amélioration de la productivité en HF obtenue de surcroît avec un abaissement de la température de chauffe du four, avantageux en terme d'abaissement de la consommation énergétique, et de prévention du risque de corrosion et donc de diminution du coût d'entretien.

**Exemple 8 : Utilisation dans un four de fabrication d'HF chauffé à 575°C d'un mélange spath synthétique/spath naturel dans le rapport r égal à 11 % introduit à raison de 1718 kg/h**

On répète l'exemple 4 en alimentant le four avec un débit de $CaF_2$ égal à 1718 kg/h, et un débit de 2300 kg/h de $H_2SO_4$.

On produit de l'HF en continu avec un débit de 761 kg/h dans des conditions satisfaisantes de marche du four.

L'analyse de la teneur en $CaF_2$ et $H_2SO_4$ donne, respectivement, les résultats suivants : 2,1 % et 2,2%.

**Exemple 9 : Utilisation dans un four de fabrication d'HP chauffé à 575 °C d'un mélange spath synthétique/spath naturel dans le rapport r égal à 25 % introduit à raison de 1812 kg/h**

On répète l'exemple 4 en alimentant le four avec un débit de $CaF_2$ égal à 1812 kg/h, et un débit de 2430 kg/h de $H_2SO_4$.

On produit de l'HF en continu avec un débit de 803 kg/h dans des conditions satisfaisantes de marche du four.

L'analyse de la teneur en $CaF_2$ et $H_2SO_4$ donne, respectivement, les résultats suivants: 1,9% et 2,2%.

Les exemples 8 et 9 montrent, par rapport à l'exemple comparatif 1, qu'il est possible, grâce au procédé selon l'invention, d'augmenter la quantité d'HF produite par le four, sans augmenter la consommation de spath exprimée par rapport à la tonne d'HF.

**Exemple comparatif 2 : Utilisation dans un four de fabrication d'HF chauffé à 575°C de spath synthétique**

On alimente un four de fabrication d'HF avec du fluorure de calcium dont le diamètre nominal moyen est de 2 µm.

Le débit de $CaF_2$ est de 1576 kg/h.

Le débit d'$H_2SO_4$ est de 2108 kg/heure.

La température de chauffe du four est de 575°C.

Au bout de 2 heures de fonctionnement, on observe une montée en pression ainsi qu'une accumulation du $CaSO_4$ dans le four, cette dernière étant identifiable par la consommation électrique accrue du moteur assurant la rotation.

Ces problèmes ne permettent pas d'assurer, dans ces conditions, une production en continu d'HF.

**Revendications**

1.    Procédé de recyclage d'une composition contenant du fluorure de calcium pulvérulent sous forme de particules micrométriques comprenant :

(i) une étape de mélange, en présence d'eau, de ladite composition avec du fluorure de calcium pulvérulent dont la taille de particules convient à l'alimentation d'un four pour la fabrication de HF, ledit fluorure de calcium étant dénommé également spath naturel, dans un rapport r inférieur à 75 % en poids, de préférence inférieur à 30 %, puis

(ii) une étape de séchage du mélange résultant de (i) jusqu'à l'obtention d'une teneur en eau résiduelle convenant également à l'alimentation d'un four pour la fabrication de HF ; l'étape (ii) étant éventuellement réalisée simultanément avec l'étape (i),

ledit procédé étant en outre **caractérisé en ce que** ou bien :

(α) ladite étape de mélange (i) est mise en oeuvre en mélangeant de façon homogène dans le rapport r désiré :

- la composition à recycler, éventuellement diluée au préalable avec de l'eau, avec
- la suspension de spath naturel destinée à l'étape de filtration du procédé de préparation dudit spath

ou bien :

(β) ladite étape de mélange (i) est mise en oeuvre en mélangeant de façon homogène dans le rapport r désiré :

- la composition à recycler, avec
- le gâteau humide de spath naturel, provenant de l'étape de filtration du procédé de préparation dudit spath ;

et on sèche simultanément ledit mélange.

2. Procédé selon la revendication 1 **caractérisé en ce que** la composition à recycler comprend le fluorure de calcium sous la forme de particules dont le diamètre nominal moyen est compris entre 0,5 et 10 μm, de préférence entre 1 et 5 μm.

3. Procédé selon la revendication 1 ou 2, **caractérisé en ce que** la composition à recycler comprend outre le $CaF_2$, de l'eau, à une teneur comprise entre 20 et 60 %, de préférence entre 30 et 55 %.

4. Procédé selon l'une des revendications 1 à 3, **caractérisé en ce que** la composition à recycler a une teneur en silice ($SiO_2$) inférieure à 1 %, de préférence inférieure à 0,8 %.

5. Procédé selon l'une des revendications 1 à 4, **caractérisé en ce que** le diamètre nominal moyen des particules de spath naturel est compris entre 30 et 400 μm, de préférence entre 40 et 200 μm.

6. Procédé selon l'une des revendications 1 à 5, **caractérisé en ce que** la teneur en eau résiduelle du mélange résultant de l'étape (ii) est inférieure à 1 %, de préférence inférieure à 0,1 %.

7. Procédé selon la revendication 1, **caractérisé en ce que** le mélange obtenu à l'étape (i) selon la mise en oeuvre (α) est séché en 2 étapes consistant :

- (ii1) d'une opération de filtration, de manière à obtenir une composition solide pulvérulente de particules de fluorure de calcium, dont la teneur en eau est comprise entre 1 et 20 %, de préférence entre 1 et 15 %, puis
- (ii2) d'une opération de séchage, de manière à obtenir un fluorure de calcium dont la teneur en eau résiduelle est inférieure à 1 %, de préférence inférieure à 0,1 %.

8. Procédé selon la revendication 7, **caractérisé en ce que** les étapes (ii1) et (ii2) sont mises en oeuvre respectivement dans le dispositif de filtration et dans le dispositif de séchage utilisés dans le procédé de préparation du spath naturel.

9. Procédé de fabrication d'HF par réaction de fluorure de calcium pulvérulent avec de l'acide sulfurique, dans un four tournant porté à une température comprise entre 400 et 700 °C, de préférence entre 500 et 600 °C, **caractérisé en ce que** le fluorure de calcium pulvérulent est obtenu par le procédé de recyclage tel que défini dans l'une des revendications 1 à 8.

10. Fluorure de calcium pulvérulent **caractérisé en ce qu'**il comprend un mélange :

- d'une composition contenant du fluorure de calcium pulvérulent sous forme de particules micrométriques et
- de fluorure de calcium pulvérulent dont la taille de particules convient à l'alimentation d'un four pour la fabrication de HF, dans un rapport r inférieur à 75 %, de préférence inférieur à 30 %, ledit mélange étant tel que défini dans l'une des revendications 1 à 6.

**Patentansprüche**

1. Verfahren zum Rezyklieren einer Zusammensetzung, die pulverförmiges Calciumfluorid in Form von Mikrometerteilchen enthält, bei dem man :

(i) die Zusammensetzung in Gegenwart von Wasser mit pulverförmigem Calciumfluorid, das eine zur Beschickung eines Ofens zur Herstellung von HF geeignete Teilchengröße aufweist und auch als Naturspat bezeichnet wird, in einem Verhältnis r von weniger als 75 Gew.-% und vorzugsweise weniger als 30 Gew.-% mischt und

(ii) die aus (i) erhaltene Mischung bis zu einem ebenfalls zur Beschickung eines Ofens zur Herstellung von HF geeigneten Restwassergehalt trocknet;

wobei Schritt (ii) gegebenenfalls gleichzeitig mit Schritt (i) durchgeführt wird,
wobei das Verfahren außerdem **dadurch gekennzeichnet ist, daß** man entweder:

(α) den Mischschritt (i) durchführt, indem man

- die zu rezyklierende Zusammensetzung gegebenenfalls nach vorheriger Verdünnung mit Wasser mit
- der für den Filtrationsschritt des Spatherstellungsverfahrens bestimmten Naturspatsuspension

in dem gewünschten Verhältnis r homogen vermischt oder

(β) den Mischschritt (i) durchführt, indem man

- die zu rezyklierende Zusammensetzung mit
- dem feuchten Naturspatkuchen aus dem Filtrationsschritt des Spatherstellungsverfahrens

in dem gewünschten Verhältnis r homogen vermischt und die Mischung gleichzeitig trocknet.

2. Verfahren nach Anspruch 1, **dadurch gekennzeichnet, daß** die zu rezyklierende Zusammensetzung Calciumfluorid in Form von Teilchen mit einem mittleren nominellen Durchmesser zwischen 0,5 und 10 μm und vorzugsweise zwischen 1 und 5 μm enthält.

3. Verfahren nach Anspruch 1 oder 2, **dadurch gekennzeichnet, daß** die zu rezyklierende Zusammensetzung neben dem $CaF_2$ Wasser in einem Gehalt zwischen 20 und 60% und vorzugsweise zwischen 30 und 55% enthält.

4. Verfahren nach einem der Ansprüche 1 bis 3, **dadurch gekennzeichnet, daß** die zu rezyklierende Zusammensetzung einen Siliciumoxidgehalt ($SiO_2$-Gehalt) von weniger als 1% und vorzugsweise von weniger als 0,8% aufweist.

5. Verfahren nach einem der Ansprüche 1 bis 4, **dadurch gekennzeichnet, daß** der mittlere nominelle Durchmesser der Naturspatteilchen zwischen 30 und 400 μm und vorzugsweise zwischen 40 und 200 μm liegt.

6. Verfahren nach einem der Ansprüche 1 bis 5, **dadurch gekennzeichnet, daß** der Restwassergehalt der aus Schritt (ii) erhaltenen Mischung weniger als 1% und vorzugsweise weniger als 0,1% beträgt.

7. Verfahren nach Anspruch 1, **dadurch gekennzeichnet, daß** man die aus Schritt (i) gemäß Durchführung (α) erhaltene Mischung in 2 Schritten trocknet, nämlich:

- (ii1) einem Filtrationsarbeitsgang, bei dem man eine feste pulverförmige Zusammensetzung aus Calciumfluoridteilchen mit einem Wassergehalt zwischen 1 und 20% und vorzugsweise zwischen 1 und 15% erhält, und dann
- (ii2) einem Trocknungsarbeitsgang, bei dem man ein Calciumfluorid mit einem Restwassergehalt von weniger als 1% und vorzugsweise weniger als 0,1% erhält.

8. Verfahren nach Anspruch 7, **dadurch gekennzeichnet, daß** man die Schritte (ii1) und (ii2) in der bei dem Verfahren zur Herstellung des Naturspats verwendeten Filtrations- bzw. Trockungsvorrichtung durchführt.

9. Verfahren zur Herstellung von HF durch Umsetzung von pulverförmigem Calciumfluorid mit Schwefelsäure in einem auf eine Temperatur zwischen 400 und 700°C und vorzugsweise zwischen 500 und 600°C gebrachten Drehofen, **dadurch gekennzeichnet, daß** das pulverförmige Calciumfluorid nach dem Rezyklierungsverfahren gemäß einem der Ansprüche 1 bis 8 erhalten wird.

10. Pulverförmiges Calciumfluorid, **dadurch gekennzeichnet, daß** es eine wie in einem der Ansprüche 1 bis 6 definierte Mischung

- aus einer pulverförmiges Calciumfluorid in Form von Mikrometerteilchen enthaltenden Zusammensetzung und
- pulverförmigem Calciumfluorid, das eine zur Beschickung eines Ofens zur Herstellung von HF geeignete Teilchengröße aufweist,

in einem Verhältnis r von weniger als 75% und vorzugsweise weniger als 30% enthält.

**Claims**

1. Process for recycling a composition comprising pulverulent calcium fluoride in the form of micrometric particles comprising:

(i) a stage of mixing, in the presence of water, the said composition with pulverulent calcium fluoride, the particle size of which is suitable for feeding a furnace for the manufacture of HF, the said calcium fluoride also being known as natural spar, in a ratio r of less than 75% by weight, preferably of less than 30%, then
(ii) a stage of drying the mixture resulting from (i) until a residual water content is obtained which is also suitable for feeding a furnace for the manufacture of HF;

the stage (ii) optionally being carried out simultaneously with the stage (i),
the said process being additionally **characterized in that**
either:

($\alpha$) the said mixing stage (i) is carried out by homogeneously mixing in the desired ratio r:

- the composition to be recycled, optionally diluted beforehand with water, with
- the natural spar suspension intended for the filtration stage of the process for the preparation of the said spar,

or:

($\beta$) the said mixing stage (i) is carried out by homogeneously mixing in the desired ratio r:

- the composition to be recycled with
- the wet natural spar cake originating from the filtration stage of the process for the preparation of the said spar;

and the said mixture is simultaneously dried.

2. Process according to Claim 1, **characterized in that** the composition to be recycled comprises calcium fluoride in the form of particles with a mean nominal diameter of between 0.5 and 10 $\mu$m, preferably between 1 and 5 $\mu$m.

3. Process according to Claim 1 or 2, **characterized in that**, in addition to the $CaF_2$, the composition to be recycled comprises water at a content of between 20 and 60%, preferably between 30 and 55%.

4. Process according to one of Claims 1 to 3, **characterized in that** the composition to be recycled has a silica ($SiO_2$) content of less than 1%, preferably of less than 0.8%.

5. Process according to one of Claims 1 to 4, **characterized in that** the mean nominal diameter of the natural spar particles is between 30 and 400 $\mu$m, preferably between 40 and 200 $\mu$m.

6. Process according to one of Claims 1 to 5, **characterized in that** the residual water content in the mixture resulting from the stage (ii) is less than 1%, preferably less than 0.1%.

7. Process according to Claim 1, **characterized in that** the mixture obtained in the stage (i) according to implementation ($\alpha$) is dried in 2 stages consisting:

- (ii1) of a filtration operation, so as to obtain a solid pulverulent composition of calcium fluoride particles with a water content of between 1 and 20%, preferably between 1 and 15%, then
- (ii2) of a drying operation, so as to obtain a calcium fluoride with a residual water content of less than 1%, preferably of less than 0.1%.

8. Process according to Claim 7, **characterized in that** the stages (ii1) and (ii2) are carried out respectively in the filtration device and in the drying device used in the process for the preparation of the natural spar.

9. Process for the manufacture of HF by reaction of pulverulent calcium fluoride with sulphuric acid in a rotary furnace brought to a temperature of between 400 and 700°C, preferably between 500 and 600°C, **characterized in that** the pulverulent calcium fluoride is obtained by the recycling process as defined in one of Claims 1 to 8.

10. Pulverulent calcium fluoride, **characterized in that** it comprises a mixture:

- of a composition comprising pulverulent calcium fluoride in the form of micrometric particles, and
- of pulverulent calcium fluoride, the particle size of which is suitable for feeding a furnace for the manufacture of HF,

in a ratio r of less than 75%, preferably of less than 30%, the said mixture being as defined in one of Claims 1 to 6.